# EUROPÄISCHE PATENTANMELDUNG

(11) **EP 4 666 833 A1**
(43) Veröffentlichungstag der Anmeldung: **24.12.2025**
(21) Anmeldenummer: 25176413.0
(22) Anmeldetag: 14.05.2025
(51) Int. Cl.: A01D 41/14, A01D 57/20, A01D 61/00

(54) **BANDSCHNEIDWERK**

(30) Priorität: 18.06.2024 DE 102024117066
(71) Anmelder: CLAAS Selbstfahrende Erntemaschinen GmbH, 33428 Harsewinkel (DE)
(72) Erfinder: Zelenyánszki, Tamás, 5600 Békéscsaba (HU)
(74) Vertreter: CLAAS Gruppe

(57) **Zusammenfassung**

Die Erfindung betrifft ein Bandschneidwerk (1), umfassend ein Mittensegment (3) mit einem mittleren Rahmensegment (2) und zwei Seitensegmente (4) mit jeweils einem äußeren Rahmensegment (2A, 2B), wobei das jeweilige Seitensegment (4) durch ein eine Schwenkachse (14) umfassendes Rahmengelenk (15) schwenkbeweglich mit dem Mittensegment (3) verbunden ist, sowie einen flexiblen Messerbalken (5), sowie hinter dem Messerbalken (5) angeordnete Fördervorrichtungen, die auf den Seitensegmenten (4) jeweils ein endlos umlaufendes, seitwärts förderndes Förderband (8) umfassen und auf dem Mittensegment (3) ein endlos umlaufendes, senkrecht zu den seitwärts fördernden Förderbändern (8) förderndes Förderband (9) umfassen, wobei zur Führung des jeweiligen seitwärts fördernden Förderbandes (8) im Bereich (21) des jeweiligen Rahmengelenks (15) jeweils eine Gleitschiene (20) angeordnet ist, um die das jeweilige seitwärts fördernde Förderband (8) herumgeführt ist.

## Beschreibung

Die Erfindung betrifft ein Bandschneidwerk gemäß dem Oberbegriff des Anspruchs 1.

Ein Bandschneidwerk der eingangs genannten Art ist aus der EP 3 420 796 B1 bekannt.

Die genannte Druckschrift beschreibt ein Bandschneidwerk, das ein Mittensegment mit einem mittleren Rahmensegment und zwei Seitensegmente mit jeweils einem äußeren Rahmensegment umfasst. Das jeweilige Seitensegment ist durch ein Rahmengelenk schwenkbar mit dem Mittensegment verbunden. Das jeweilige Rahmengelenk umfasst eine Schwenkachse, um die das jeweilige Seitensegment schwenkbar ist. Die Seitensegmente sind um die horizontal verlaufende Schwenkachse des Rahmengelenks relativ zum Mittensegment in vertikaler Richtung verschwenkbar, um unebenes Gelände auszugleichen. Weiterhin umfassen die Bandschneidwerke einen flexiblen Messerbalken, welcher an um eine parallel zum Messerbalken verlaufende Drehachse schwenkbar an den Rahmensegmenten angelenkten Tragarmen angeordnet ist. Der flexible Messerbalken folgt einer Bodenkontur im Wesentlichen auf dieser aufliegend, indem der Messerbalken innerhalb eines Schwenkbereichs durch Auslenkung der Tragarme um die Drehachse zwischen einer unteren Stellung und einer oberen Stellung überführbar ist. Hinter dem Messerbalken sind mehrere Fördereinrichtungen angeordnet, die auf den Seitensegmenten jeweils ein endlos umlaufendes, seitwärts förderndes Förderband umfassen und auf dem Mittensegment ein endlos umlaufendes, senkrecht zu den seitwärts fördernden Förderbändern förderndes Förderband umfassen. Die seitwärts fördernden Förderbänder transportieren im Betriebszustand des Bandschneidwerks von dem Messerbalken abgeschnittenes Erntegut hin zu dem im Wesentlichen senkrecht fördernden Förderband. Mittels des im Wesentlichen senkrecht fördernden Förderbandes wird das Erntegut dann zur weiteren Verarbeitung hin zu einem Förderkanal und von dort zu einer Erntemaschine transportiert. Die EP 3 420 796 B1 offenbart, dass die seitwärts fördernden Förderbänder jeweils zwischen einer ersten und zweiten Förderwalze umgelenkt werden, wobei die erste Förderwalze drehbar mit dem Mittensegment und die zweite Walze drehbar mit dem Seitensegment verbunden ist. Weiterhin sieht die EP 3 420 796 B1 vor, dass die seitwärts fördernden Förderbänder jeweils um eine dritte Walze herumgeführt sind, dessen Längsachse identisch mit der Schwenkachse des Rahmengelenks ist. Derartige Walzen zum Führen oder Umlenken der Förderbänder haben ein besonders großes Eigengewicht. Zusätzlich benötigen diese eine komplexe Lageranordnung und den hierfür erforderlichen Bauraum, sowie einen erhöhten Wartungsbedarf der Lager. Besonders bei den in ihrer Schneidbreite immer größer werdenden Vorsatzgeräten ist es erforderlich das Gewicht sämtlicher Komponenten möglichst auf ein Minimum zu reduzieren, damit eine Erntemaschine und die Bodeneingriffsmittel des Bandschneidwerks die auf diese wirkenden Lasten tragen können.

Es ist deshalb Aufgabe der Erfindung, die beschriebenen Nachteile des Standes der Technik zu vermeiden und insbesondere eine verbesserte Führung der seitwärts fördernden Förderbänder eines Bandschneidwerks zu schaffen.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein Bandschneidwerk vorgeschlagen, umfassend ein Mittensegment mit einem mittleren Rahmensegment und zwei Seitensegmente mit jeweils einem äußeren Rahmensegment, wobei das jeweilige Seitensegment durch ein eine Schwenkachse umfassendes Rahmengelenk schwenkbeweglich mit dem Mittensegment verbunden ist, sowie einen flexiblen Messerbalken, sowie hinter dem Messerbalken angeordnete Fördervorrichtungen, die auf den Seitensegmenten jeweils ein endlos umlaufendes, seitwärts förderndes Förderband umfassen und auf dem Mittensegment zumindest ein endlos umlaufendes, im Wesentlichen senkrecht zu den seitwärts fördernden Förderbändern förderndes Förderband umfassen, wobei zur Führung des jeweiligen seitwärts fördernden Förderbandes im Bereich des jeweiligen Rahmengelenks jeweils eine Gleitschiene angeordnet ist, um die das jeweilige seitwärts fördernde Förderband herumgeführt ist. Eine derartige Gleitschiene benötigt keine komplexen Lagerungen, sondern kann auf einfache Art und Weise an die Struktur des Bandschneidwerks angebunden werden. Weiterhin hat die Gleitschiene im Vergleich zu beispielsweise einer Rolle zum Umlenken des Förderbandes ein besonders geringes Eigengewicht. Mithin ermöglicht die vorliegende Erfindung das Gesamtgewicht des Bandschneidwerks zu reduzieren.

Eine vorteilhafte Weiterbildung sieht vor, dass die Oberseite der jeweiligen Gleitschiene ein bogenförmiges Profil aufweist, das sich quer zur Förderrichtung des jeweiligen seitlich fördernden Förderbands erstreckt. Entlang einer derartigen Oberfläche kann das Förderband besonders vorteilhaft entlanggleiten, insbesondere bei einem nach unten verschwenkten äußeren Rahmensegment. Hierbei kann sich das Gleitelement an einer Knickstelle des Förderbandes in einem nach unten geschwenkten Zustand eines äußeren Rahmensegments befinden.

Eine vorteilhafte Weiterbildung sieht vor, dass zumindest an dem mittleren Rahmensegment in einer Ebene verlaufende Tragelemente vorgesehen sind, die die seitwärts fördernden Förderbänder tragen, wobei die Tragelemente jeweils eine in der Ebene verlaufende Kontaktfläche mit einem der seitwärts fördernden Förderbänder aufweisen, wobei sich die Oberseite der Gleitschiene unterhalb der Ebene erstreckt. Gemäß dieser vorteilhaften Weiterbildung liegt das jeweilige Förderband lediglich in einer vertikal nach unten geschwenkten Position des jeweiligen äußeren Rahmensegments auf der Oberseite der jeweiligen Gleitschiene auf. In einer horizontal ausgerichteten Position des jeweiligen äußeren Rahmensegments kann das jeweilige Förderband beabstandet zu der jeweiligen Gleitschiene sein. Hierdurch erfolgt lediglich im Bedarfsfalle eine Umlenkung des jeweiligen Förderbands durch die Gleitschienen, sodass die auf die Gleitschienen wirkenden Belastungen erheblich reduziert sind.

Eine besondere Gewichtsersparnis ergibt sich, wenn die jeweilige Gleitschiene aus Kunststoff besteht.

Eine vorteilhafte Weiterbildung sieht vor, dass eine Unterseite der jeweiligen Gleitschiene an ihren den Längsseiten zugewandten Enden jeweils eine Mehrzahl von Vorsprüngen mit Aussparungen umfasst und sich mittig zwischen den an den Längsseiten angeordneten Vorsprüngen eine Leiste mit Aussparungen in Längsrichtung der jeweiligen Gleitschiene erstreckt. Diese vorteilhafte Weiterbildung ermöglicht es, dass die Gleitschiene modular im Bereich des linksseitigen und rechtsseitigen äußeren Rahmengelenks anordenbar ist.

Eine vorteilhafte Weiterbildung sieht vor, dass die jeweilige Gleitschiene schwenkbeweglich um eine horizontale Achse an dem mittleren Rahmensegment angeordnet ist, wobei die jeweilige Gleitschiene zwischen einer unteren Position und einer oberen Position verschwenkbar ist, wobei sich die Gleitschiene in einer mittleren Position entlang der Schwenkachse des Rahmengelenks erstreckt. Hierdurch ergibt sich eine besonders vorteilhafte Positionierung der Gleitschiene, die sich vorteilhaft auf die Umlenkung des Förderbandes mittels der Gleitschiene auswirkt.

Eine vorteilhafte Weiterbildung sieht vor, dass der flexibler Messerbalken einer Bodenkontur im Wesentlichen aufliegend folgt, indem der Messerbalken an um eine parallel zum Messerbalken verlaufende Drehachse schwenkbar an den Rahmensegmenten angelenkten Tragarmen angeordnet ist, wobei der Messerbalken durch Auslenkung der Tragarme um die Drehachse innerhalb eines Schwenkbereichs zwischen einer unteren Stellung und einer oberen Stellung überführbar ist. Hierbei kann vorgesehen sein, dass die Gleitschiene vorderseitig an dem flexiblen Messerbalken angebunden ist, sodass die Gleitschiene einer Bewegung des Messerbalkens folgt.

Die vorliegende Erfindung wird nachstehend anhand eines in den Zeichnungen dargestellten Ausführungsbeispiels näher erläutert. Es zeigen:
- Figur 1: schematisch und exemplarisch eine Ansicht eines an einem Einzugskanal eines Mähdreschers angeordneten Bandschneidwerkes;
- Figur 2: schematisch und exemplarisch eine Teilansicht des Bandschneidwerks im Bereich einer Schwenkachse zwischen einem Mittensegment und einem Seitensegment;
- Figur 3: schematisch und exemplarisch eine Teilansicht des Bandschneidwerkes gemäß Fig. 1 von hinten;
- Figur 4: schematisch und exemplarisch eine Teilansicht des Bandschneidwerks im Bereich einer Schwenkachse zwischen einem Mittensegment und einem Seitensegment;
- Figur 5: schematisch und exemplarisch eine Ansicht eines Gleitelements von unten.

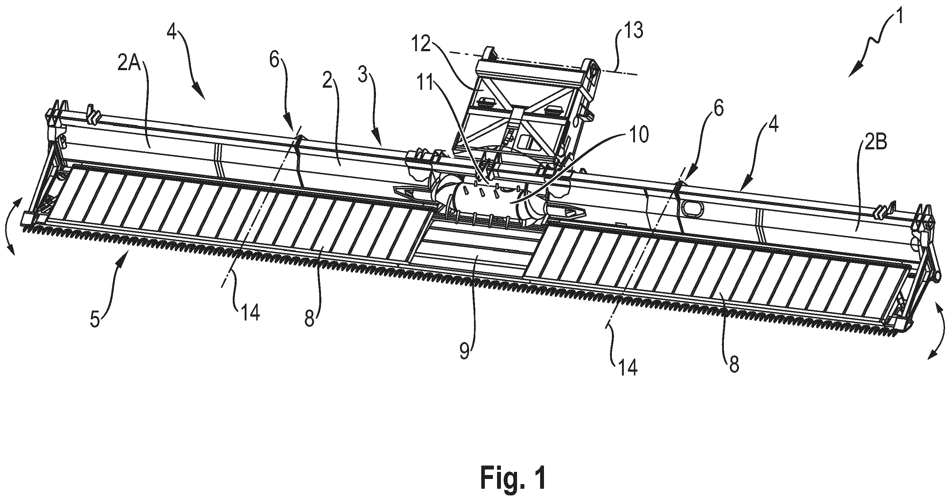

In Fig. 1 ist schematisch und exemplarisch eine Ansicht eines an einem Einzugskanal 12 eines Mähdreschers angeordneten Bandschneidwerkes 1 dargestellt. Das Bandschneidwerk 1 weist einen segmentierten Rahmen auf. Das Bandschneidwerk 1 weist ein Mittensegment 3 mit einem mittleren Rahmensegment 2 und zwei Seitensegmente 4 mit einem äußeren Rahmensegment 2A bzw. 2B auf. Die Seitensegmente 4 sind benachbart zu dem Mittensegment 3 angeordnet. An dem Mittensegment 3 und den Seitensegmenten 4 ist auf der dem segmentierten Rahmen gegenüberliegenden Vorderseite des Bandschneidwerkes 1 ein bodenkopierender Messerbalken 5 angeordnet, der sich im Wesentlichen über die gesamte Breite des Bandschneidwerkes 1 erstreckt. Weiterhin ist eine segmentiert ausgeführte - nicht dargestellte - Haspel vorgesehen, die sich im Wesentlichen über die gesamte Breite des Bandschneidwerkes 1 erstreckt.

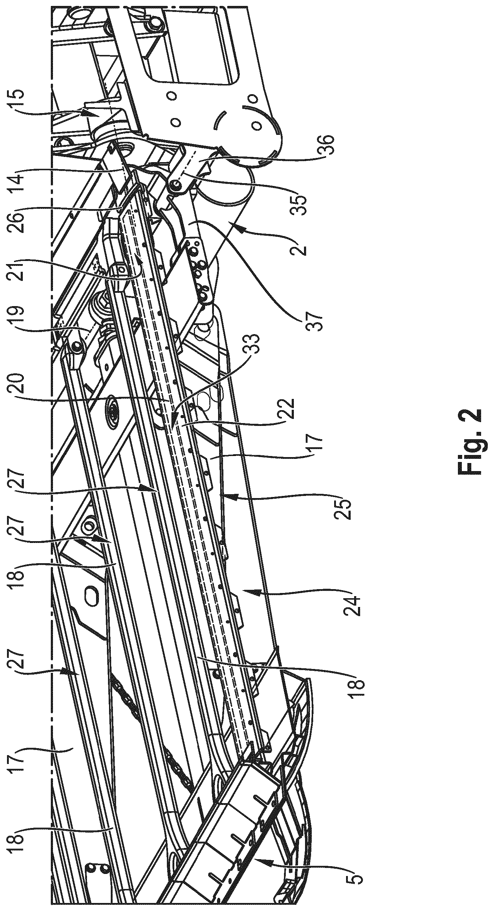

Der flexible Messerbalken 5 ist in an sich bekannter Weise mittels an den Rahmensegmenten 2, 2A, 2B angelenkten Tragarmen 17 relativ zu diesem in vertikaler Richtung schwenkbar, wie in Fig. 2 dargestellt. Die Tragarme 17 sind um eine parallel zum Messerbalken 5 verlaufende Drehachse 19 schwenkbar an den Rahmensegmenten 2, 2A, 2B angelenkt.

Wie Fig. 1 weiter zeigt, wird von dem Messerbalken 5 abgetrenntes Erntegut einer hinter dem Messerbalken 5 angeordneten Fördervorrichtung zugeführt, die auf den jeweiligen Seitensegmenten 4 als ein endlos umlaufendes Förderband 8 ausgeführt ist. Die endlos umlaufenden Förderbänder 8 sind benachbart zu einem an dem Mittensegment 3 angeordneten weiteren endlos umlaufenden Förderband 9, um von dem Messerbalken 5 abgeschnittenes Erntegut seitwärts, d.h. quer zur Fahrtrichtung des Mähdreschers, in Richtung des Förderbandes 9 zu transportieren und einer als angetriebenen Einzugswalze 10 ausgeführten Einzugsvorrichtung des Bandschneidwerks 1 zuzuführen. In einer alternativen hier nicht näher dargestellten Ausgestaltung kann das Mittensegment 3 anstatt eines einzelnen Förderbandes 9 auch zwei Förderbänder 9 umfassen, wobei die beiden Förderbänder 9 V-förmig angeordnet und im Wesentlichen senkrecht zu den Förderbändern 8 der Seitensegmente 4 ausgerichtet sind.

Das Förderband 9 des Mittensegments 3 fördert dabei quer zur Förderrichtung der seitwärts fördernden Förderbänder 8 der Seitensegmente 4. Die Einzugswalze 10 führt das von den endlos umlaufenden Förderbändern 8 bzw. 9 dem Mittenabschnitt 3 seitlich zugeführte Erntegut einer in dem mittleren Rahmensegment 2 vorgesehenen, hinter der Einzugswalze 10 befindlichen Öffnung 11 zu. Durch die Öffnung 11 wird das aufgenommene Erntegut durch den am Mähdrescher angeordneten Einzugskanal 12, an dem das Bandschneidwerk 1 lösbar befestigt ist, dem Mähdrescher zur weiteren Verarbeitung zugeführt. Im Einzugskanal 12 ist eine Fördervorrichtung angeordnet, welche das von der Einzugswalze 10 zugeführte Erntegut annimmt und in den Mähdrescher zur weiteren Bearbeitung weiterfördert. Der Einzugskanal 12 ist zur Höhenverstellung des Bandschneidwerks 1 durch - nicht dargestellte - Linearaktoren um eine horizontal verlaufende Achse 13 schwenkbar am Mähdrescher angelenkt.

In einer zu den Tragarmen 17 parallel und oberhalb verlaufenden Ebene sind Tragelemente 18 an den Rahmensegmenten 2, 2A, 2B schwenkbar angelenkt, welche die umlaufenden Förderbänder 8, 9 tragen, wie in Fig. 2 beispielhaft dargestellt ist. Das jeweilige seitwärts fördernde Förderband 8 umfasst eine erste Umlenkrolle (nicht dargestellt), die am Mittensegment 3 angeordnet ist, und eine zweite Umlenkrolle (nicht dargestellt), die endseitig am jeweiligen Seitensegment 4, diametral zur ersten Umlenkrolle, angeordnet ist, um die das jeweilige Förderband 8 eines Seitensegments 4 endlos umläuft.

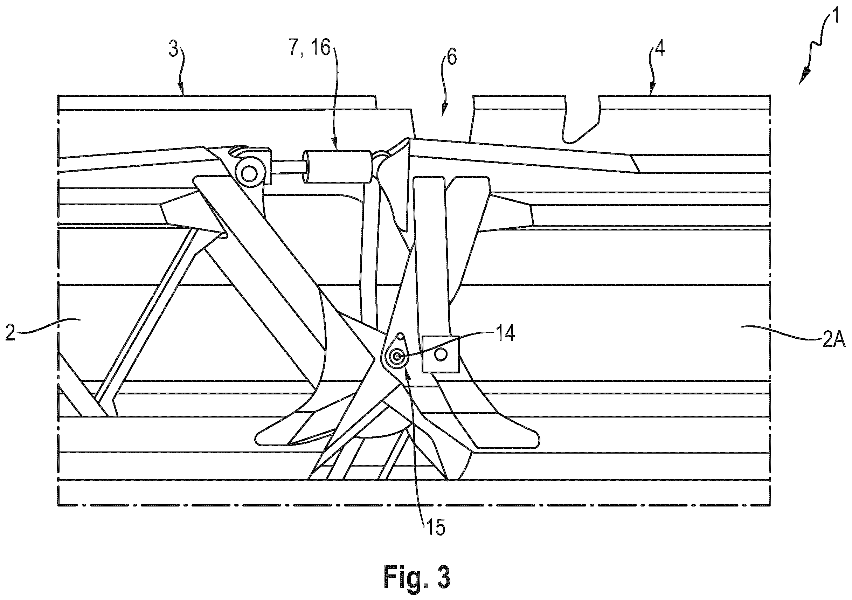

In Fig. 3 ist schematisch und exemplarisch eine Teilansicht des Bandschneidwerkes gemäß Fig. 1 von hinten dargestellt. Das jeweilige Seitensegment 4 ist durch ein eine Schwenkachse 14 umfassendes Rahmengelenk 15 schwenkbar mit dem Mittensegment 3 verbunden. Das jeweilige Seitensegment 4 ist durch einen ansteuerbaren Aktuator 7 durch Schwenken um die Schwenkachse 14 relativ zum Mittensegment 3 positionierbar ist. Die Aktuatoren 7 sind hier und vorzugsweise als doppeltwirkende Hydraulikzylinder 16 ausgeführt. Hierdurch sind die äußeren Rahmensegmente 2A, 2B in ihren Verbindungsbereichen 6 gelenkig an das mittlere Rahmensegment 2 gekoppelt. Das Schwenken der äußeren Rahmensegmente 2A, 2B respektive der Seitensegmente 4 relativ zum mittleren Rahmensegment 2 bzw. dem Mittensegment 3 ermöglicht eine verbesserte Anpassung an die Bodenkontur. Zusätzlich zur gelenkigen Anpassung der äußeren Rahmensegmente 2A, 2B erfolgt die Bodenkonturanpassung durch den flexiblen Messerbalken 5. Der flexible Messerbalken 5 kann mit den an die Rahmensegmente 2, 2A, 2B um die Drehachse 19 schwenkbar gekoppelten Tragarmen 17 innerhalb eines Auslenkbereichs durch vertikale Auslenkbewegungen dem Untergrund folgen.

Der flexible Messerbalken 5 folgt beim Erntevorgang einer Bodenkontur im Wesentlichen auf dieser aufliegend. Hierzu ist der Messerbalken 5 innerhalb eines Schwenkbereichs zwischen einer unteren Stellung 24 und einer oberen Stellung 25 durch vertikales Auslenken der Tragarme 17 um die Drehachse 19 überführbar.

Zur Führung des jeweiligen seitwärts fördernden Förderbandes 8 im Bereich 21 des jeweiligen Rahmengelenks 15 ist jeweils eine Gleitschiene 20 zwischen dem Rahmengelenk 15 und dem Messerbalken 5 positioniert. Das jeweilige Förderband 8 ist um die jeweilige Gleitschiene 20 herumgeführt. Hierbei ist die jeweilige Gleitschiene 20 derart positioniert, dass bei einem Verschwenken des jeweiligen äußeren Rahmensegments 2A, 2B ausgehend von einer horizontal ausgerichteten Position hin zu einer in eine vertikal nach unten ausgerichtete Position, die Gleitschiene 20 sich im Bereich einer an dem jeweiligen seitwärts fördernden Förderband 8 resultierenden Knickstelle befindet, wobei das Förderband 8 an der Knickstelle über eine Oberseite 22 der Gleitschiene 20 entlang gleitet.

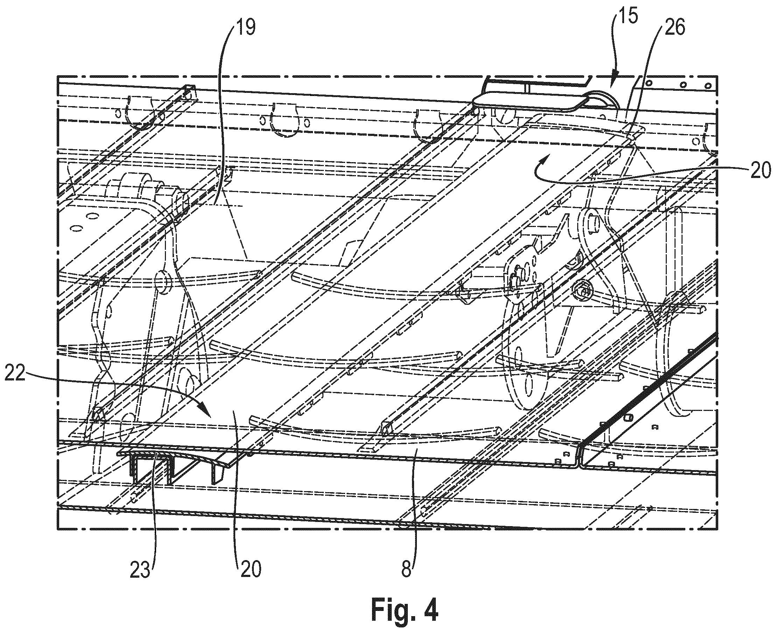

Wie insbesondere Fig. 4 zeigt, weist die jeweilige Gleitschiene 20 ein bogenförmiges Profil 23 auf. Hier und vorzugsweise ist das bogenförmige Profil 23 konvex ausgeführt, sodass das jeweilige Förderband 8 bei einer nach unten ausgerichteten Position des jeweiligen Rahmensegments 2A, 2B an der Oberfläche 2 der Gleitschiene 20 entlanggleiten kann. Das bogenförmige Profil 23 erstreckt sich in Längsrichtung quer zur Förderrichtung des jeweiligen Förderbands 8. Die Gleitschiene 20 besteht aus Kunststoff, insbesondere Plastik, wodurch sich eine besonders große Gewichtsersparnis gegenüber aus dem Stand der Technik bekannten Umlenkelementen im Bereich des Rahmengelenks 19 ergibt. Weiterhin umfasst die jeweilige Gleitschiene 20 eine sich in Förderrichtung des Förderbands 8 erstreckende Führungsnut 26, durch die vorzugsweise ein Stollen des Förderbands 8 im bestimmungsgemäßen Betriebszustand des Bandschneidwerks 1 entlanggleitet.

Wie vorstehend bereits beschrieben und in Fig. 2 dargestellt, sind an dem mittleren Rahmensegment 2 in einer Ebene verlaufende Tragelemente 18 angeordnet, die jeweils eines der seitwärts fördernden Förderbänder 8 tragen. Die Tragelemente 18 weisen jeweils eine in der gemeinsamen Ebene verlaufende Kontaktfläche 27 mit einem der seitwärts fördernden Förderbänder 8 auf. Die Oberseite 22 der jeweiligen Gleitschiene 20 erstreckt sich unterhalb dieser Ebene, sodass lediglich in einer vertikal nach unten geschwenkten Position des jeweiligen äußeren Rahmensegments 2A, 2B das jeweilige Förderband 8 auf der Oberseite 22 der jeweiligen Gleitschiene 20 aufliegt und in einer horizontal ausgerichteten Position des jeweiligen äußeren Rahmensegments 2A, 2B das jeweilige Förderband 8 beabstandet zu der jeweiligen Gleitschiene 20 ist. Hierdurch erfolgt lediglich im Bedarfsfall eine Umlenkung der Förderbänder 8 durch die Gleitschienen 20, sodass die auf die Gleitschiene 20 wirkenden Belastungen erheblich reduziert sind.

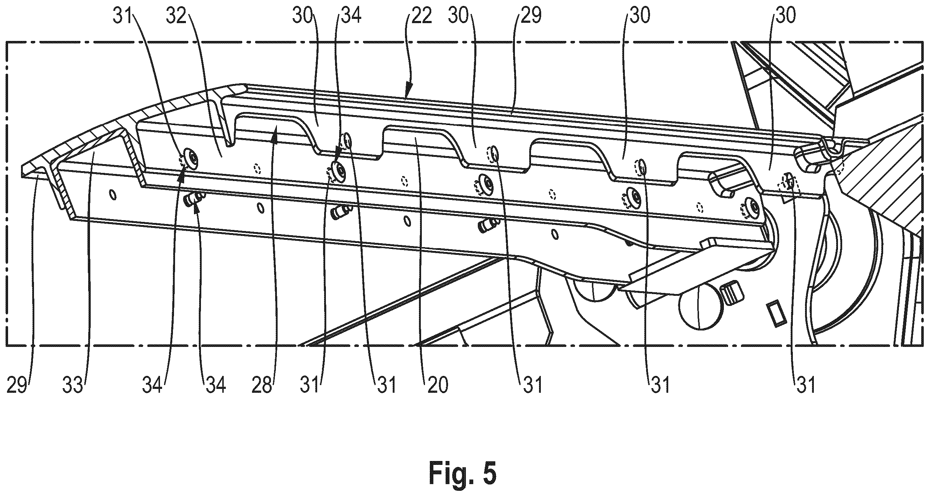

In Fig. 5 ist die Gleitschiene 20 in einer perspektivischen Ansicht von unten dargestellt. Eine Unterseite 28 der jeweiligen Gleitschiene 20 umfasst an ihren den Längsseiten 29 zugewandten Enden jeweils eine Mehrzahl von Vorsprüngen 30 mit Aussparungen 31 und eine Leiste 32 mit Aussparungen 31, die sich mittig zwischen den an den Längsseiten 29 angeordneten Vorsprüngen 30 in Längsrichtung der jeweiligen Gleitschiene 20 erstreckt. In der Ansicht gemäß Fig. 5 sind lediglich die Vorsprünge 30 an einer Längsseite 29 der Gleitschiene 20 ersichtlich, deshalb sei darauf hingewiesen, dass die Vorsprünge 30 an der nicht weiter dargestellten Längsseite 29 identisch ausgebildet sind. Die Vorsprünge 30 sowie die Leiste 32 erstrecken sich orthogonal zu der Unterseite 28. Zwischen der Leiste 32 und den an einer der Längsseiten 29 angeordneten Vorsprüngen 30 erstreckt sich ein U-förmiges Trägerelement 33. Die Gleitschiene 20 ist an dem U-förmigen Trägerelement 33 mittels Schraubverbindungen 34 befestigt, wobei sich die Schraubbolzen durch die Aussparungen 31 erstrecken. Die Vorsprünge 30 an der Längsseite 29 die in der in Fig. 5 gezeigten Ausführungsform nicht zur Befestigung der Gleitschiene 20 an dem Trägerelement 33 genutzt sind, sind zur Befestigung der Gleitschiene 20 im Bereich des gegenüberliegenden Rahmengelenks 15 vorgesehen, sodass die Gleitschiene 20 modular an beiden Rahmengelenken 15 anordenbar ist.

Die jeweilige Gleitschiene 20 ist schwenkbeweglich um eine jeweilige horizontale Achse 35 an dem mittleren Rahmensegment 2 angeordnet. Dies ist exemplarisch für eine der Gleitschienen 20 in Fig. 2 dargestellt. Wie Fig. 2 zeigt, ist eine Kulisse 36 ortsfest an dem mittleren Rahmensegment 2 angeordnet, wobei ein Schwenkarm 37 schwenkbeweglich um die Achse 35 an der Kulisse 36 angeordnet ist. Der Schwenkarm 37 haltert wiederum das Trägerelement 33 der Gleitschiene 20. Mithin ist die Gleitschiene 20 zwischen einer hier nicht weiter dargestellten unteren Position und einer hier nicht weiter dargestellten oberen Position verschwenkbeweglich, wobei sich die Gleitschiene 20 in der in Fig. 2 dargestellten mittleren Position entlang der Schwenkachse 14 des Rahmengelenks 15 erstreckt. Die mittlere Position bildet eine Zwischenstellung zwischen der unteren und oberen Position der Gleitschiene 20 aus. Vorderseitig ist die Gleitschiene 20 bzw. das Trägerelement 33 in hier nicht dargestellter Weise an dem Messerbalken 5 angebunden, sodass die Gleitschiene 20 einer Bewegung des Messerbalkens 5 folgt.

**Bezugszeichenliste:**

| | | | |
|---|---|---|---|
| 1 | Bandschneidwerk | 32 | Leiste |
| 2 | Mittleres Rahmensegment | 33 | Trägerelement |
| 2A | Äußeres Rahmensegment | 34 | Schraubverbindung |
| 2B | Äußeres Rahmensegment | 35 | Achse |
| 3 | Mittensegment | 36 | Kulisse |
| 4 | Seitensegment | 37 | Schwenkarm |
| 5 | Messerbalken | | |
| 6 | Verbindungsbereich | | |
| 7 | Aktuator | | |
| 8 | Förderband | | |
| 9 | Förderband | | |
| 10 | Einzugswalze | | |
| 11 | Öffnung | | |
| 12 | Einzugskanal | | |
| 13 | Achse | | |
| 14 | Schwenkachse | | |
| 15 | Rahmengelenk | | |
| 16 | Hydraulikzylinder | | |
| 17 | Tragarm | | |
| 18 | Tragelement | | |
| 19 | Drehachse | | |
| 20 | Gleitschiene | | |
| 21 | Bereich | | |
| 22 | Oberseite | | |
| 23 | Profil | | |
| 24 | Untere Stellung | | |
| 25 | Obere Stellung | | |
| 26 | Führungsnut | | |
| 27 | Kontaktfläche | | |
| 28 | Unterseite | | |
| 29 | Längsseite | | |
| 30 | Vorsprung | | |
| 31 | Aussparung | | |

## Patentansprüche

1. Bandschneidwerk (1), umfassend
- ein Mittensegment (3) mit einem mittleren Rahmensegment (2) und zwei Seitensegmente (4) mit jeweils einem äußeren Rahmensegment (2A, 2B), wobei das jeweilige Seitensegment (4) durch ein eine Schwenkachse (14) umfassendes Rahmengelenk (15) schwenkbeweglich mit dem Mittensegment (3) verbunden ist,
- einen flexiblen Messerbalken (5),
sowie
- hinter dem Messerbalken (5) angeordnete Fördervorrichtungen, die auf den Seitensegmenten (4) jeweils ein endlos umlaufendes, seitwärts förderndes Förderband (8) umfassen und auf dem Mittensegment (3) zumindest ein endlos umlaufendes, im Wesentlichen senkrecht zu den seitwärts fördernden Förderbändern (8) förderndes Förderband (9) umfassen,
**dadurch gekennzeichnet, dass**
zur Führung des jeweiligen seitwärts fördernden Förderbandes (8) im Bereich (21) des jeweiligen Rahmengelenks (15) jeweils eine Gleitschiene (20) angeordnet ist, um die das jeweilige seitwärts fördernde Förderband (8) herumgeführt ist.

2. Bandschneidwerk (1) nach Anspruch 1, **dadurch gekennzeichnet, dass** die Oberseite (22) der jeweiligen Gleitschiene (20) ein bogenförmiges Profil (23) aufweist, das sich quer zur Förderrichtung des jeweiligen seitlich fördernden Förderbands (8) erstreckt.

3. Bandschneidwerk (1) nach einem der Ansprüche 1 bis 2, **dadurch gekennzeichnet, dass** zumindest an dem mittleren Rahmensegment (2) in einer Ebene verlaufende Tragelemente (18) vorgesehen sind, die die seitwärts fördernden Förderbänder (8) tragen, wobei die Tragelemente (18) jeweils eine in der Ebene verlaufende Kontaktfläche (27) mit einem der seitwärts fördernden Förderbänder (8) aufweisen, wobei sich die Oberseite (22) der Gleitschiene (20) unterhalb der Ebene erstreckt.

4. Bandschneidwerk (1) nach einem der Ansprüche 1 bis 3, **dadurch gekennzeichnet, dass** die jeweilige Gleitschiene (20) aus Kunststoff besteht.

5. Bandschneidwerk (1) nach einem der Ansprüche 1 bis 4, **dadurch gekennzeichnet, dass** die Oberseite (22) der jeweiligen Gleitschiene (20) eine Führungsnut (26) umfasst.

6. Bandschneidwerk (1) nach einem der Ansprüche 1 bis 5, **dadurch gekennzeichnet, dass** die Gleitschiene (20) an einem U-förmigen Trägerelement (33) befestigt ist.

7. Bandschneidwerk (1) nach einem der Ansprüche 1 bis 6, **dadurch gekennzeichnet, dass** eine Unterseite (28) der jeweiligen Gleitschiene (20) an ihren den Längsseiten (29) zugewandten Enden jeweils eine Mehrzahl von Vorsprüngen (30) mit Aussparungen (31) umfasst und sich mittig zwischen den an den Längsseiten (29) angeordneten Vorsprüngen (30) eine Leiste (32) mit Aussparungen (31) in Längsrichtung der jeweiligen Gleitschiene (20) erstreckt.

8. Bandschneidwerk (1) nach einem der Ansprüche 1 bis 7, **dadurch gekennzeichnet, dass** die jeweilige Gleitschiene (20) schwenkbeweglich um eine horizontale Achse (35) an dem mittleren Rahmensegment (2) angeordnet ist, wobei die jeweilige Gleitschiene (20) zwischen einer unteren Position und einer oberen Position verschwenkbar ist, wobei sich die Gleitschiene (20) in einer mittleren Position entlang der Schwenkachse (14) des Rahmengelenks (15) erstreckt.

9. Bandschneidwerk (1) nach einem der Ansprüche 1 bis 8, **dadurch gekennzeichnet, dass** der flexibler Messerbalken (5) einer Bodenkontur im Wesentlichen aufliegend folgt, indem der Messerbalken (5) an um eine parallel zum Messerbalken (5) verlaufende Drehachse (19) schwenkbar an den Rahmensegmenten (2, 2A, 2B) angelenkten Tragarmen (17) angeordnet ist, wobei der Messerbalken (5) durch Auslenkung der Tragarme (17) um die Drehachse (19) innerhalb eines Schwenkbereichs zwischen einer unteren Stellung (24) und einer oberen Stellung (25) überführbar ist.

10. Bandschneidwerk (1) nach Anspruch 9, **dadurch gekennzeichnet, dass** die Gleitschiene (20) vorderseitig an dem flexiblen Messerbalken (5) angebunden ist, sodass die Gleitschiene (20) einer Bewegung des Messerbalkens (5) folgt.
